# EUROPEAN PATENT SPECIFICATION

(11) **EP 4 556 106 B1**
(45) Date of publication and mention of the grant of the patent: **27.05.2026**
(21) Application number: 23210582.5
(22) Date of filing: 17.11.2023
(51) Int. Cl.: B01D 63/02, B01D 65/00, B01D 65/02, B01D 63/04

(54) **MODULAR MEMBRANE HOLDER FOR HOLLOW FIBER MEMBRANES**
MODULARER MEMBRANHALTER FÜR HOHLFASERMEMBRANEN
SUPPORT DE MEMBRANE MODULAIRE POUR MEMBRANES À FIBRES CREUSES

(43) Date of publication of application: 21.05.2025
(73) Proprietor: JB Ventures B.V., 7442 CL Nijverdal (NL)
(72) Inventor: Berends, Hendrik Johan Ferdinand, 7481 CJ Haaksbergen (NL)
(74) Representative: 't Jong, Bastiaan Jacob

(56) References cited:
- EP-A1- 4 088 809
- WO-A1-2017/105356
- US-A1- 2009 050 555
- US-A1- 2009 071 894
- US-A1- 2012 132 580

## Description

The invention relates to a membrane holder for hollow fiber membranes, in particular for application in a tube filter, which membrane holder comprises:
- a central pipe;
- radially extending wall parts distributed along the circumference of the central pipe in discrete axial planes spaced apart along the length of the central pipe, and closing parts extending between the free ends of the radially extending wall parts arranged within a single axial plane for confining a bundle of hollow fiber membranes between two adjacent radially extending wall parts and a closing part. Such a membrane holder is known from EP 4088809.

The known membrane holders are used to hold bundles of hollow fiber membranes inside of a housing. A liquid to be filtered, such as water, is fed through a header into the fibers and permeates out of the membranes leaving any contaminants behind. The filtered liquid is then discharged via openings in the central pipe.

In order to clean the membranes, the liquid flow is reversed and the contaminants are flush in a backwash mode. The flow in backwash mode is substantially larger than in filtration mode. As the hollow fiber membranes are fragile, the outflow of liquid from the outflow openings in the central pipe in backwash mode must be careful not to damage the fiber membranes. This can be achieved by using a low pressure, but this increases the time for cleaning the membrane filter.

EP 4088809 propose to use a ring shaped deflector plate, which covers the outflow openings which are arranged in spaced apart bands in the central pipe. The holding elements are arranged on this ring shaped deflector plate. Although the direct outflow of liquid onto the fragile fiber membranes is prevented and a higher flow can be used in backwash mode, the capacity is however limited by the distance between the ring shaped deflector plate and the central pipe. Increasing this distance to increase the capacity will also increase the overall diameter of the membrane filter, which is undesired.

It is an object of the invention to reduce or even remove the above mentioned disadvantages.

This object is achieved with a membrane holder according to the invention, which is characterized in that the wall of the central pipe comprises a plurality of radially inward directed depressions, wherein each depression comprises at least one outflow opening to allow liquid flowing in the central pipe to exit through the at least one outflow opening.

By providing depressions having at least one outflow opening in the central pipe, the direction of the outflow from the outflow opening can be changed into a direction, which is no longer radial and no longer is directed to the hollow fiber membranes. As the outflow opening is arranged in the depression, the distance of the outflow opening to the fiber membranes is increased. This combined with the depression forming an expansion chamber ensures that the strength of the inflowing liquid, in backwash mode, will be reduced substantially.

Furthermore, the use of depressions provided with at least one outflow opening allows for the openings to extend along virtually the full length of the central pipe, while with the prior art, the openings could only be provided at the position where the ring shaped deflector plates are arranged. As a result the resistance when filtering a liquid as well the resistance in backwash mode, is substantially reduced compared to the prior art.

In a preferred embodiment of the membrane holder according to the invention each depression comprises at least two outflow openings arranged in opposite wall parts of the depression and facing each other.

The liquid flowing through the at least two facing outflow openings will collide in the space of the depression and cause turbulence which substantially reduces the strength of the flow towards the fragile fiber membranes and allows for an increase of the overall flow.

In a further preferred embodiment of the membrane holder according to the invention each depression has a circumferential wall part depending from the wall of the central pipe to a bottom wall part, and wherein the at least one outflow opening is arranged in the circumferential wall part of the depression.

With the outflow openings arranged in the depending wall, the direction of the flow through the openings will be perpendicular to the radial direction and minimize any direct flow directed onto the membranes.

In yet another embodiment of the membrane holder according to the invention the inner surface of the wall of the central pipe deflects smooth into the depending circumferential wall part of a depression to guide the liquid flow towards the at least one outflow opening.

The smooth transition from the inner surface of the wall of the central pipe into the depending circumferential wall reduces the flow resistance.

Preferably, the central pipe is composed out of at least alternately connected pipe modules and connector modules, wherein the depressions are provided in the pipe modules and wherein the radially extending wall parts are arranged to the connector modules.

By using pipe modules and connector modules, the membrane holder is build modular and the length of the membrane holder can easily be adapted.

In another embodiment of the membrane holder according to the invention a pipe module and connector module are connected by connecting means, such as an adhesive connection, a welded connection, a threaded connection or a bayonet connection.

In a very preferred embodiment of the membrane holder according to the invention the connecting means comprise a first sleeve arranged on one of the pipe module and the connector module and a second sleeve arranged on the other of the pipe module and the connector module, wherein the first sleeve is cylindrical and the second sleeve has a polygonal cross section of which the inner surface has an inscribed circle with a diameter corresponding to the outer diameter of the first sleeve, wherein at least one protrusion is arranged on the outer surface of the first sleeve and a corresponding groove is arranged on the inner surface of the second sleeve, such that the first sleeve can be inserted into the second sleeve and can be locked by rotating the at least one protrusion into the corresponding groove.

With this embodiment, a quick connection of modules is achieved with a correct alignment because the protrusions snap into the grooves. In addition the contact between the cylindrical outer surface of the first sleeve and the polygonal inner surface of the second sleeve is small. Only where the protrusions snap into the grooves, there is a contact between the first and the second sleeve. At the remaining part, the distance between the cylindrical surface and the polygonal surface is such that a liquid can flow through this space. This is of advantage when the membrane filter is cleaned with chemicals. Any chemicals in this space are easily flushed with the liquid flow between the larger part of the surfaces of the first and second sleeve with. As a result the membrane filter will be quickly back in filtration mode and the amount of flushing liquid will be reduced.

The invention further relates to a membrane module comprising:
- a membrane holder according to the invention;
- bundles of hollow fiber membranes arranged between each two adjacent radially extending wall parts and a closing part, wherein the bundles extend parallel to the central pipe;
- at least one header arranged to one end of the bundles of hollow fiber membranes to discharge a liquid, such as water, from the hollow fiber membranes;
- a closing member arranged to the other end of the bundles of hollow fiber membranes for closing each hollow fiber membrane; and
- a housing arranged between the at least one header and the closing member, wherein the central pipe extends at least through one of the closing member or at least one header to supply liquid.

These and other features of the invention will be elucidated in conjunction with the accompanying drawings.
Figure 1 shows a perspective view of an embodiment of a membrane holder according to the invention.
Figure 2 shows a perspective view of a pipe module of the embodiment of figure 1.
Figure 3 shows a cross-sectional view of the pipe module of figure 2.
Figure 4 shows an exploded view of a pipe module and connector module of the embodiment of figure 1.

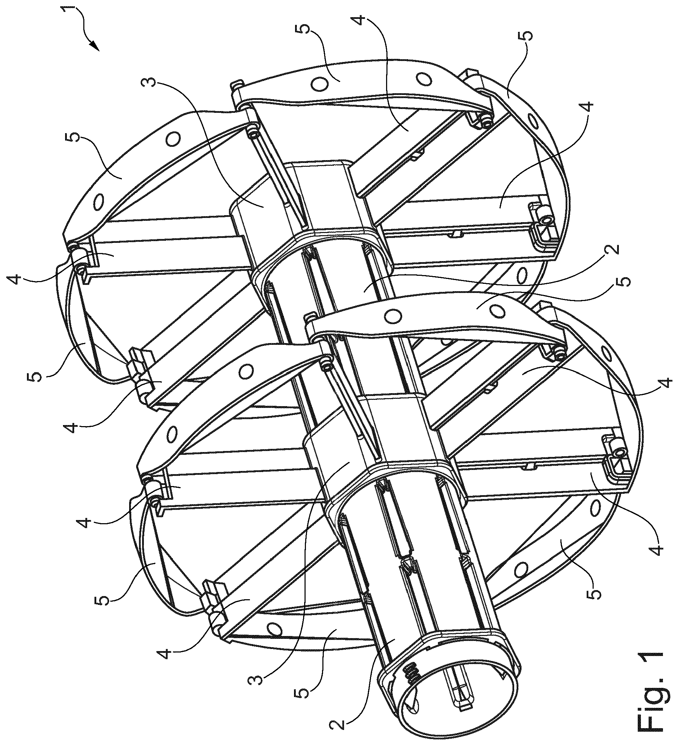

Figure 1 shows an embodiment 1 of a membrane holder according to the invention. The membrane holder 1 comprises a central pipe composed alternately out of pipe modules 2 and connector modules 3. Radially extending wall parts 4 are arranged to the connector modules 3 and closing parts 5 are arranged extending between the free ends of the radially extending wall parts 4. Two adjacent radially extending wall parts 4 together with one closing part 5 provide for a confinement for a bundle of hollow fiber membranes. In this embodiment, the membrane holder 1 can hold six bundles of hollow fiber membranes.

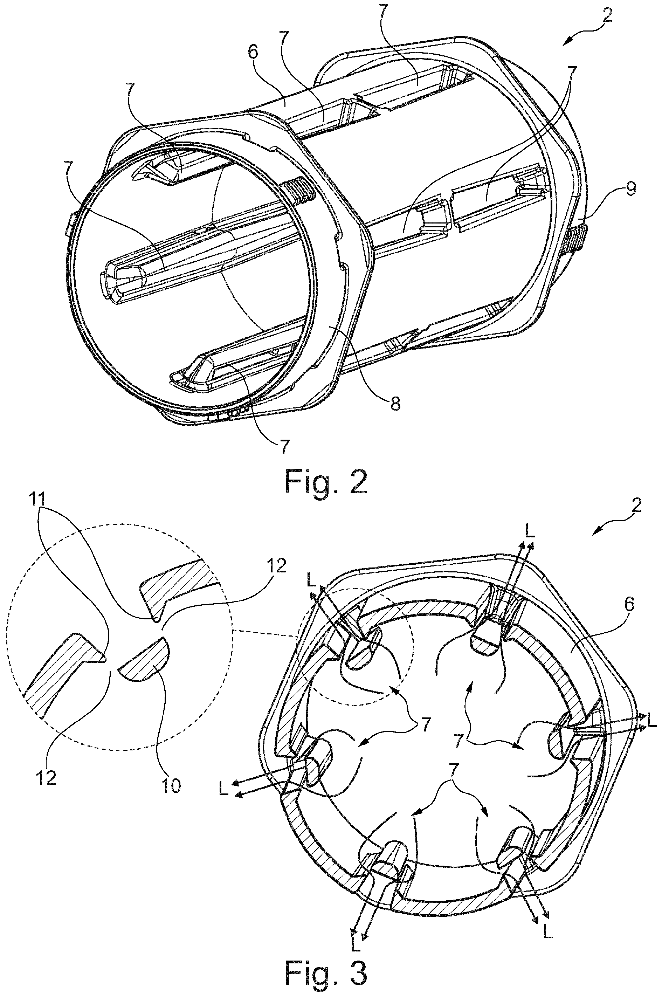

Figure 2 shows a perspective view of a pipe module 2 of the membrane holder 1 of figure 1. The pipe module 2 has a cylindrical wall 6 with a plurality of elongate depressions 7 extending in longitudinal direction. A connecting sleeve 8, 9 is arranged on each end of the pipe module 2 for connection with a connector module 3.

Figure 3 shows a cross-section of the pipe module 2 of figure 2. Each depression 7 has a bottom wall 10 and a circumferential wall 11 depending from the cylindrical wall 6 in which two facing outflow openings 12 are arranged (see enlarged portion of figure 3). As shown the inner surface of the wall 6 of the pipe module 2 deflects smooth into the depending circumferential wall 11 of a depression 7.

Liquid L flowing in backwash mode through the central pipe module 2 will flow via the outflow openings 12 towards the outside, where the hollow fiber membranes will be held by the radially extending wall parts 4 and closing parts 5. Due to the depression 7 the liquid L will, after exiting the outflow openings 12, first enter the space formed by the depression 7 where the flow rate of the liquid L will be reduced and could even become turbulent. This will ensure that the fragile hollow fiber membranes will not be damaged by the liquid L.

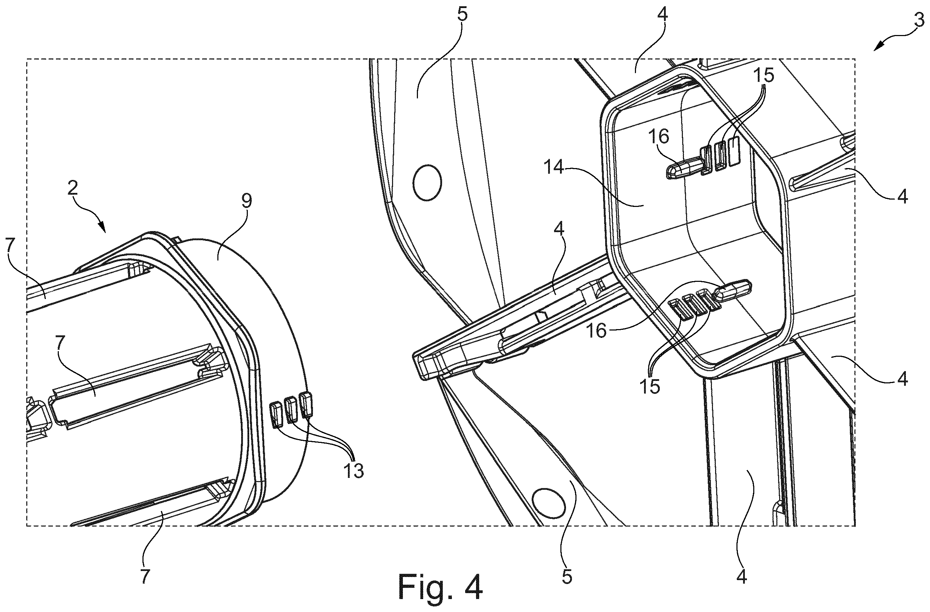

Figure 4 shows an exploded view of a pipe module 2 and connector module 3. The connecting sleeve 9 of the pipe module 2 is cylindrical and provided with three protrusions 13.

The connector module 3 has a polygonal cross-section, in this embodiment a hexagon shaped cross-section. On the inner surface 14 sets of three grooves 15 are provided as well as a cam 16, which ensures that a connecting sleeve 9 is inserted to the correct depth.

Because the outer diameter of the cylindrical connection sleeve 9 corresponds to the inscribed circle of the hexagon shape of the connector module 3, the connection sleeve 9 can be inserted into the connector module 3 with the protrusions 13 aligned with a corner of the hexagon shape. When inserted the pipe module 2 is rotated in the connector module 3 such that the protrusions 13 snap into a set of three grooves 15. This provides for a firm connection between the connector module 3 and the connection sleeve 9. Due to the hexagon shape of the connector module 3 and the cylindrical connection sleeve 9, there is only line contact between the connection sleeve and the connector module and liquid is able to flow through the space between both surfaces.

This method of connecting a pipe module 2 with a connector module 3 can also be applied in different types of modular membrane holders independent of the application of depressions in the pipe modules 2.

## Claims

1. Membrane holder (1) for hollow fiber membranes, in particular for application in a tube filter, which membrane holder (1) comprises:
- a central pipe (2, 3);
- radially extending wall parts (4) distributed along the circumference of the central pipe (2, 3) in discrete axial planes spaced apart along the length of the central pipe (2, 3), and closing parts (5) extending between the free ends of the radially extending wall parts (4) arranged within a single axial plane for confining a bundle of hollow fiber membranes between two adjacent radially extending wall parts (4) and a closing part (5);
**characterized in that**
the wall (6) of the central pipe (2)comprises a plurality of radially inward directed depressions (7), wherein each depression (7) comprises at least one outflow opening (12) to allow liquid (L) flowing in the central pipe (2, 3) to exit through the at least one outflow opening (12).

2. Membrane holder (1) according to claim 1, wherein each depression (7) comprises at least two outflow openings (12) arranged in opposite wall parts (11) of the depression (7) and facing each other.

3. Membrane holder (1) according to claim 1 or 2, wherein each depression (7) has a circumferential wall part (11) depending from the wall (6) of the central pipe (2) to a bottom wall part (10), and wherein the at least one outflow opening (12) is arranged in the circumferential wall part (11) of the depression (7).

4. Membrane holder (1) according to claim 3, wherein the inner surface of the wall (6) of the central pipe (2) deflects smooth into the depending circumferential wall part (11) of a depression (7) to guide the liquid (L) flow towards the at least one outflow opening (12).

5. Membrane holder (1) according to any of the preceding claims, wherein the central pipe (2, 3) is composed out of at least alternately connected pipe modules (2) and connector modules (3), wherein the depressions (7) are provided in the pipe modules (2) and wherein the radially extending wall parts (4) are arranged to the connector modules (3).

6. Membrane holder (1) according to claim 5, wherein a pipe module (2) and connector module (3) are connected by connecting means (13, 15), such as an adhesive connection, a welded connection, a threaded connection or a bayonet connection.

7. Membrane holder (1) according to claim 6, wherein the connecting means comprise a first sleeve (9) arranged on one of the pipe module (2) and the connector module (3) and a second sleeve (14) arranged on the other of the pipe module (2) and the connector module (3), wherein the first sleeve (9) is cylindrical and the second sleeve (14) has a polygonal cross section of which the inner surface (14) has an inscribed circle with a diameter corresponding to the outer diameter of the first sleeve (9), wherein at least one protrusion (13) is arranged on the outer surface of the first sleeve (9) and a corresponding groove (15) is arranged on the inner surface (14) of the second sleeve, such that the first sleeve (9) can be inserted into the second sleeve (14) and can be locked by rotating the at least one protrusion (13) into the corresponding groove (15).

8. Membrane module (1) comprising:
- a membrane holder (1) according to one of the preceding claims;
- bundles of hollow fiber membranes arranged between each two adjacent radially extending wall parts (4) and a closing part (5), wherein the bundles extend parallel to the central pipe (2, 3);
- at least one header arranged to one end of the bundles of hollow fiber membranes to discharge a liquid, such as water, from the hollow fiber membranes;
- a closing member arranged to the other end of the bundles of hollow fiber membranes for closing each hollow fiber membrane; and
- a housing arranged between the at least one header and the closing member, wherein the central pipe (2, 3) extends at least through one of the closing member or at least one header to supply liquid.

## Patentansprüche

1. Membranhalter (1) für Hohlfasermembranen, insbesondere zur Anwendung in einem Rohrfilter, wobei der Membranhalter (1) umfasst:
- ein zentrales Rohr (2, 3);
- sich radial erstreckende Wandteile (4), die entlang des Umfangs des zentralen Rohres (2, 3) in diskreten axialen Ebenen verteilt sind, die entlang der Länge des zentralen Rohres (2, 3) voneinander beabstandet sind, und Verschlussteile (5), die sich zwischen den freien Enden der sich radial erstreckenden Wandteile (4) erstrecken, die in einer einzigen axialen Ebene angeordnet sind, zum Einschließen eines Bündels von Hohlfasermembranen zwischen zwei benachbarten, sich radial erstreckenden Wandteilen (4) und einem Verschlussteil (5);
**dadurch gekennzeichnet, dass**
die Wand (6) des zentralen Rohres (2) eine Vielzahl von radial nach innen gerichteten Vertiefungen (7) umfasst, wobei jede Vertiefung (7) mindestens eine Ausflussöffnung (12) umfasst, um es Flüssigkeit (L), die im zentralen Rohr (2, 3) fließt, zu erlauben, durch die mindestens eine Ausflussöffnung (12) auszutreten.

2. Membranhalter (1) nach Anspruch 1, wobei jede Vertiefung (7) mindestens zwei Ausflussöffnungen (12) umfasst, die in gegenüberliegenden Wandteilen (11) der Vertiefung (7) angeordnet und einander zugewandt sind.

3. Membranhalter (1) nach Anspruch 1 oder 2, wobei jede Vertiefung (7) einen umlaufenden Wandteil (11) aufweist, der von der Wand (6) des zentralen Rohres (2) zu einem Bodenwandteil (10) abhängt, und wobei die mindestens eine Ausflussöffnung (12) im umlaufenden Wandteil (11) der Vertiefung (7) angeordnet ist.

4. Membranhalter (1) nach Anspruch 3, wobei die Innenoberfläche der Wand (6) des zentralen Rohres (2) sanft in den abhängenden umlaufenden Wandteil (11) einer Vertiefung (7) abgelenkt wird, um den Fluss einer Flüssigkeit (L) in Richtung der mindestens einen Ausflussöffnung (12) zu lenken.

5. Membranhalter (1) nach einem der vorstehenden Ansprüche, wobei das zentrale Rohr (2, 3) aus mindestens abwechselnd miteinander verbundenen Rohrmodulen (2) und Verbindermodulen (3) besteht, wobei die Vertiefungen (7) in den Rohrmodulen (2) bereitgestellt sind und wobei die sich radial erstreckenden Wandteile (4) an den Verbindermodulen (3) angeordnet sind.

6. Membranhalter (1) nach Anspruch 5, wobei ein Rohrmodul (2) und ein Verbindermodul (3) durch Verbindungsmittel (13, 15), wie beispielsweise eine Klebeverbindung, eine Schweißverbindung, eine Gewindeverbindung oder eine Bajonettverbindung, miteinander verbunden sind.

7. Membranhalter (1) nach Anspruch 6, wobei die Verbindungsmittel eine erste Hülle (9) umfassen, die auf einem von dem Rohrmodul (2) und dem Verbindermodul (3) angeordnet ist, und eine zweite Hülle (14), die auf dem anderen von dem Rohrmodul (2) und dem Verbindermodul (3) angeordnet ist, wobei die erste Hülle (9) zylindrisch ist und die zweite Hülle (14) einen polygonalen Querschnitt aufweist, dessen Innenoberfläche (14) einen Inkreis mit einem Durchmesser aufweist, der dem Außendurchmesser der ersten Hülle (9) entspricht, wobei mindestens ein Vorsprung (13) auf der Außenoberfläche der ersten Hülle (9) angeordnet ist und eine entsprechende Nut (15) auf der Innenoberfläche (14) der zweiten Hülle angeordnet ist, sodass die erste Hülle (9) in die zweite Hülle (14) eingeführt werden kann, und durch Drehen des mindestens einen Vorsprungs (13) in die entsprechende Nut (15) verriegelt werden kann.

8. Membranmodul (1), umfassend:
- einen Membranhalter (1) nach einem der vorstehenden Ansprüche;
- Bündel von Hohlfasermembranen, die zwischen je zwei benachbarten, sich radial erstreckenden Wandteilen (4) und einem Verschlussteil (5) angeordnet sind, wobei sich die Bündel parallel zum zentralen Rohr (2, 3) erstrecken;
- mindestens einen Kopfbereich, der an einem Ende der Bündel von Hohlfasermembranen angeordnet ist, um eine Flüssigkeit, wie beispielsweise Wasser, aus den Hohlfasermembranen abzuführen;
- ein Verschlusselement, das am anderen Ende der Bündel von Hohlfasermembranen angeordnet ist, zum Schließen jeder Hohlfasermembran; und
- ein Gehäuse, das zwischen dem mindestens einen Kopfbereich und dem Verschlusselement angeordnet ist, wobei sich das zentrale Rohr (2, 3) mindestens durch eines von dem Verschlusselement oder dem mindestens einen Kopfbereich erstreckt, um Flüssigkeit zuzuführen.

## Revendications

1. Support de membrane (1) pour membranes à fibres creuses, notamment pour application dans un filtre tubulaire, lequel support de membrane (1) comprend :
- un tuyau central (2, 3) ;
- des parties de paroi s'étendant radialement (4) réparties le long de la circonférence du tuyau central (2, 3) dans des plans axiaux discrets espacés le long de la longueur du tuyau central (2, 3), et des parties de fermeture (5) s'étendant entre les extrémités libres des parties de paroi s'étendant radialement (4) agencées dans un seul plan axial pour confiner un faisceau de membranes à fibres creuses entre deux parties de paroi s'étendant radialement (4) adjacentes et une partie de fermeture (5) ;
**caractérisé en ce que**
la paroi (6) du tuyau central (2) comprend une pluralité d'évidements dirigés radialement vers l'intérieur (7), dans lequel chaque évidement (7) comprend au moins une ouverture d'écoulement sortant (12) pour permettre à un liquide (L) s'écoulant dans le tuyau central (2, 3) de sortir par l'au moins une ouverture d'écoulement sortant (12).

2. Support de membrane (1) selon la revendication 1, dans lequel chaque évidement (7) comprend au moins deux ouvertures d'écoulement sortant (12) agencées dans des parties de paroi opposées (11) de l'évidement (7) et se faisant face.

3. Support de membrane (1) selon la revendication 1 ou 2, dans lequel chaque évidement (7) présente une partie de paroi circonférentielle (11) dépendant de la paroi (6) du tuyau central (2) à une partie de paroi inférieure (10), et dans lequel l'au moins une ouverture d'écoulement sortant (12) est agencée dans la partie de paroi circonférentielle (11) de l'évidement (7).

4. Support de membrane (1) selon la revendication 3, dans lequel la surface intérieure de la paroi (6) du tuyau central (2) se dévie en douceur dans la partie de paroi circonférentielle dépendante (11) d'un évidement (7) pour guider l'écoulement de liquide (L) vers l'au moins une ouverture d'écoulement de sortie (12).

5. Support de membrane (1) selon l'une quelconque des revendications précédentes, dans lequel le tuyau central (2, 3) est composé d'au moins des modules de tuyau (2) et des modules de raccord (3) raccordés alternativement, dans lequel les évidements (7) sont prévus dans les modules de tuyau (2) et dans lequel les parties de paroi s'étendant radialement (4) sont agencées sur les modules de raccord (3).

6. Support de membrane (1) selon la revendication 5, dans lequel un module de tuyau (2) et un module de raccord (3) sont raccordés par des moyens de raccord (13, 15), tels qu'un raccord adhésif, un raccord soudé, un raccord fileté ou un raccord à baïonnette.

7. Support de membrane (1) selon la revendication 6, dans lequel les moyens de raccord comprennent un premier manchon (9) agencé sur l'un du module de tuyau (2) et du module de raccord (3) et un second manchon (14) agencé sur l'autre du module de tuyau (2) et du module de raccord (3), dans lequel le premier manchon (9) est cylindrique et le second manchon (14) présente une section transversale polygonale dont la surface intérieure (14) présente un cercle inscrit avec un diamètre correspondant au diamètre extérieur du premier manchon (9), dans lequel au moins une saillie (13) est agencée sur la surface extérieure du premier manchon (9) et une rainure correspondante (15) est agencée sur la surface intérieure (14) du second manchon, de sorte que le premier manchon (9) puisse être inséré dans le second manchon (14) et puisse être verrouillé en faisant tourner la ou les saillies (13) dans la rainure correspondante (15).

8. Module de membrane (1) comprenant :
- un support de membrane (1) selon l'une des revendications précédentes ;
- des faisceaux de membranes à fibres creuses agencés entre chaque paire de parties de paroi s'étendant radialement (4) adjacentes et une partie de fermeture (5), dans lequel les faisceaux s'étendent parallèlement au tuyau central (2, 3) ;
- au moins un collecteur agencé à une extrémité des faisceaux de membranes à fibres creuses pour évacuer un liquide, tel que de l'eau, des membranes à fibres creuses ;
- un organe de fermeture agencé à l'autre extrémité des faisceaux de membranes à fibres creuses pour fermer chaque membrane à fibres creuses ; et
- un boîtier agencé entre le ou les collecteurs et l'organe de fermeture, dans lequel le tuyau central (2, 3) s'étend au moins à travers l'un de l'organe de fermeture ou au moins un collecteur pour fournir du liquide.
